# FASCICULE DE BREVET EUROPEEN

(11) **EP 3 239 042 B1**
(45) Date de publication et mention de la délivrance du brevet: **06.06.2018**
(21) Numéro de dépôt: 17161360.7
(22) Date de dépôt: 16.03.2017
(51) Int. Cl.: B64C 13/10

(54) **DISPOSITIF HAPTIQUE POUR FAIRE VIBRER UN MANCHE DE PILOTAGE**
HAPTISCHE VORRICHTUNG, DIE EINEN STEUERKNÜPPEL IN SCHWINGUNGEN VERSETZT
A HAPTIC DEVICE FOR VIBRATING A CONTROL STICK

(30) Priorité: 26.04.2016 FR 1600689
(43) Date de publication de la demande: 01.11.2017
(73) Titulaire: Airbus Helicopters, 13725 Marignane Cedex (FR)
(72) Inventeur: IZZO, Pascal, 13130 BERRE L'ETANG (FR)
(74) Mandataire: GPI & Associés

(56) Documents cités:
- FR-A1- 2 875 787
- US-A- 2 566 409
- US-A- 5 986 582
- US-A- 6 002 349

## Description

La présente invention concerne un dispositif haptique pour faire vibrer un manche de pilotage, un ensemble comprenant ce manche de pilotage et ce dispositif haptique, et un aéronef.

L'invention se situe donc dans le domaine technique des systèmes haptiques d'aéronef.

Un aéronef comprend usuellement des manches de pilotage manoeuvrables par un pilote. L'expression « manche de pilotage » désigne un organe manoeuvrable manuellement par un pilote pour contrôler une surface aérodynamique de l'aéronef.

Par exemple, un hélicoptère est muni d'un rotor principal participant au moins partiellement à la sustentation de cet hélicoptère. Un manche de pilotage dit « manche cyclique » permet de piloter cycliquement le pas des pales de ce rotor principal. Un manche de pilotage dit « levier de pas collectif » permet de piloter collectivement le pas des pales de ce rotor principal.

Un manche de pilotage peut comprendre un dispositif haptique agencé dans une poignée. Un tel dispositif haptique permet à un pilote de ressentir une sensation au niveau de l'une de ses mains pour l'informer d'un événement. Un dispositif haptique peut notamment être utilisé pour signaler à un pilote que l'aéronef est piloté en utilisant une loi de pilotage particulière.

L'intégration d'un dispositif haptique est difficile sur un manche de pilotage d'un aéronef à voilure tournante. En effet, un tel manche de pilotage peut comporter des moyens manoeuvrables par un pilote rendant difficiles l'intégration d'un dispositif haptique. De tels moyens manoeuvrables sont dénommés parfois « contacteur » ou « switch » en langue anglaise, et peuvent comprendre différents types de boutons. Sur un giravion, un manche de pilotage comporte un nombre parfois plus conséquent de contacteurs que sur un avion.

Un tel dispositif haptique peut posséder un organe vibrant. Un tel organe vibrant permet de faire vibrer le manche de pilotage pour transmettre une information à un pilote. En fonction de l'emplacement de l'organe vibrant, le pilote ne perçoit pas les mêmes sensations lorsque l'organe vibrant est sollicité.

Un organe vibrant peut être agencé dans une poignée du manche de pilotage, ou au niveau d'une articulation de ce manche de pilotage. Par exemple, le manche de pilotage est articulé à un système à cardan muni d'un organe vibrant.

L'intégration de l'organe vibrant dans la poignée est intéressante. Toutefois, la poignée possède alors des dimensions relativement importantes pour pouvoir accueillir l'organe vibrant.

En outre, l'organe vibrant peut faire obstacle, au sein du manche de pilotage, à la circulation de fils électriques connectés à des contacteurs portés par la poignée.

L'intégration de l'organe vibrant dans un système à cardan ne présente éventuellement pas cet inconvénient. Toutefois, le pilote risque de ne pas ressentir aisément les vibrations générées par l'organe vibrant en raison de son emplacement.

Le document US2566409 présente un manche de pilotage muni d'un tube portant une poignée.

Un dispositif vibrant est fixé à ce tube. Le dispositif vibrant comporte un manchon glissé tout autour du tube. Ce manchon porte un moyen de roulement à billes annulaire coopérant avec un anneau denté. Cet anneau denté porte une masse excentrique en arc de cercle.

L'anneau denté est engrené par un pignon monté sur l'arbre de sortie d'un moteur électrique. Le moteur électrique peut ainsi engendrer une rotation de l'anneau denté et de la masse excentrique autour du tube.

Le document US5986582 propose un premier dispositif vibrant monté sur le dessus d'un manche de pilotage de type « levier de pas collectif ». Le premier dispositif vibrant comporte une bobine électrique disposée dans un carter. La bobine électrique est traversée par une tige qui s'étend longitudinalement en dehors du carter entre deux butées. En outre, un ressort s'étend longitudinalement entre un épaulement de la tige et le carter. La bobine électrique est contrôlée pour induire une translation de la tige d'une butée à l'autre butée.

Le document US5986582 propose un deuxième dispositif vibrant. Ce deuxième dispositif comporte une masse excentrique mise en rotation autour d'un axe. Plus en particulier, ce dispositif comprend une base, un ensemble massique comprenant une branche s'étendant circonférentiellement autour d'un axe central et étant reliée à la base par un moyen de mobilité conférant un degré de liberté en rotation à cette branche autour d'un axe de rotation par rapport à la base, et un organe d'excitation comprenant un moyen d'excitation électrique configuré pour faire mettre en rotation autour de l'axe de rotation ladite branche, et par conséquent ledit ensemble massique.

Les documents FR 2875787 et US 6002349 sont aussi connus.

La présente invention a alors pour objet de proposer un dispositif haptique innovant.

L'invention a donc pour objet un dispositif haptique pour faire vibrer un tronçon d'un manche de pilotage sur commande, notamment un manche de pilotage d'un aéronef.

Ce dispositif haptique comprend :
- une base,
- un ensemble massique comprenant au moins une branche battante dite plus simplement « branche », ladite au moins une branche s'étendant circonférentiellement sur au moins 45 degrés autour d'un axe central, l'axe central étant configuré pour être en position de montage confondu avec un axe d'extension médian du tronçon, chaque branche étant reliée à la base par un moyen de mobilité conférant un degré de liberté en rotation à cette branche autour d'un axe de rotation par rapport à la base, l'axe de rotation étant distinct de l'axe central,

- un organe d'excitation comprenant un moyen d'excitation électrique configuré pour faire battre en rotation autour de l'axe de rotation ladite au moins une branche d'une position de repos vers une position activée,
- un moyen élastique de rappel tendant à maintenir chaque branche dans la position de repos correspondante.

L'expression « position de montage » fait référence à la position dans laquelle se trouve l'ensemble massique lorsque le dispositif haptique est fixé au tronçon du manche de pilotage.

L'expression « axe d'extension médian » désigne l'axe selon lequel s'étend en élévation le manche de pilotage de son extrémité inférieure à son extrémité supérieure, et donc en particulier l'axe selon lequel s'étend en élévation le tronçon considéré. Cet axe d'extension médian peut être disposé sensiblement selon la pesanteur.

L'expression « moyen d'excitation électrique » désigne un organe alimenté par un courant électrique pour entrainer un mouvement de chaque branche par rapport à la base et au tronçon du manche de pilotage. Le moyen d'excitation électrique comporte une interface d'entrée recevant un ordre provenant d'une unité de traitement usuelle pour faire battre chaque branche. Une telle unité de traitement peut par exemple requérir l'excitation de chaque branche lors de certaines phases de vol définies par le constructeur.

Dès lors, le dispositif haptique comporte un moyen de fixation permettant de fixer ce dispositif haptique sur et autour d'un tronçon d'un manche de pilotage. Par exemple, la base est fixée au tronçon du manche de pilotage à faire vibrer. Chaque branche s'étend sur un secteur angulaire d'au moins 45 degrés autour du tronçon dans un plan orthogonal à l'axe d'extension médian du tronçon. Eventuellement, le dispositif haptique est agencé dans une gorge ménagée dans une surface extérieure du tronçon du manche de pilotage.

Ainsi, le dispositif haptique n'est pas agencé dans le manche de pilotage et peut éviter d'entraver le cheminement de fils électriques au sein de ce manche de pilotage.

En outre, le dispositif haptique n'est pas nécessairement fixé au niveau d'une articulation à cardan. Le tronçon équipé du dispositif haptique peut être un tronçon destiné à être saisi par le pilote.

Par ailleurs, la base peut être solidarisée au tronçon du manche de pilotage. Par contre, chaque branche est mobile par rapport à la base pour faire vibrer le tronçon sur ordre d'une unité de traitement. Le mouvement des branches peut induire une vibration du manche de pilotage en engendrant un contact contre la surface extérieure du manche de pilotage et chaque branche selon une fréquence caractéristique, et/ou par effet inertiel. Par exemple, chaque branche est en contact contre un cylindre central du tronçon du manche de pilotage dans sa position au repos ou sa position activée.

Ainsi, le fonctionnement du dispositif haptique repose sur la mise en vibration d'une ou plusieurs branches mobiles disposées de manière périphérique autour du tronçon. La transmission de la vibration des branches à travers la structure du manche de pilotage est alors effectuée soit par effet inertiel soit par contact avec le manche de pilotage.

A cet effet, le dispositif haptique comporte un moyen d'excitation électrique engendrant le déplacement de chaque branche et un moyen élastique rappelant chaque branche vers une position de repos. Successivement, le moyen d'excitation est sollicité à une certaine fréquence pour écarter chaque branche de sa position de repos, le moyen élastique ramenant chaque branche dans sa position de repos dès que le moyen d'excitation cesse d'exercer un effort sur chaque branche.

Un tel moyen élastique peut comporter un ressort, un organe comprenant un bloc d'une matière du groupe du caoutchouc, voire une lame élastique par exemple.

Le moyen d'excitation peut être sollicité pour induire une vibration du manche de pilotage en régime quasi-statique, ou en mode résonnant au regard d'un mode de vibration du manche de pilotage en vue d'amplifier les vibrations produites. Dans ce mode résonant, la fréquence d'excitation de chaque branche est fixe et déterminée par les dimensions et caractéristiques du dispositif haptique qui constitue un système masse-ressort.

Le dispositif haptique peut de plus comporter une ou plusieurs des caractéristiques qui suivent.

Ainsi, le moyen de mobilité peut comporter un pivot.

Un tel pivot peut comprendre une articulation présentant uniquement un degré de liberté en rotation.

Le moyen de mobilité peut aussi prendre la forme d'un joint déformable.

Eventuellement, le moyen de mobilité peut comporter une lame élastique.

La lame élastique est sollicitée uniquement dans son domaine de déformation élastique pour tendre à revenir dans sa position de repos.

La lame élastique peut être une partie intégrante d'une branche, et/ou d'un organe de la base.

Selon un autre aspect, le moyen élastique et le moyen de mobilité d'une branche peuvent être confondus.

Lorsque le moyen de mobilité est réalisé avec un élément élastique, cet élément élastique peut éventuellement remplir totalement ou partiellement la fonction du moyen élastique.

Par exemple, une lame flexible permet la rotation d'une branche et tend à ramener cette branche dans sa position au repos.

Selon un autre aspect, la base peut comporter une tige et deux platines, la tige s'étendant selon un axe d'extension transversalement d'une platine à l'autre platine, chaque branche étant reliée par un moyen de mobilité à une platine.

Par exemple, la tige s'étend parallèlement à un axe tangent à un cercle dans lequel est inscrit le dispositif haptique. Cette tige peut éventuellement servir de support au moyen d'excitation, et/ou de support à un moyen de fixation, et/ou encore de lien entre deux moyens de mobilité.

Selon un autre aspect, l'ensemble massique peut comporter une seule branche s'étendant autour de l'axe central sur au moins 270 degrés.

Le dispositif haptique présente alors une architecture dissymétrique mettant en jeu une seule branche pivotant autour d'un axe de rotation fixe. La vibration produite par le mouvement de balancier de la branche peut alors être transmise au corps du manche de pilotage par effet inertiel. Un contact entre une branche et la surface du manche de pilotage n'est pas obligatoire.

Eventuellement, le moyen élastique s'étend entre cette seule branche et une platine de la base.

De manière alternative, l'ensemble massique peut comporter deux branches, chaque branche s'étendant d'un pied relié à la base vers une extrémité libre, un entrefer séparant transversalement les extrémités libres des deux branches, ledit moyen d'excitation déplaçant les deux branches selon deux sens opposés.

Le dispositif haptique peut alors inclure deux branches, éventuellement de forme hémicylindrique et/ou formant une structure symétrique de type masse et contre-masse. Les deux branches pivotent selon des sens différents, éventuellement en opposition de phase.

Les deux branches vibrantes peuvent induire la vibration du manche de pilotage par contact avec le manche de pilotage. Le corps du manche de pilotage subit alors une légère déformation à la fréquence d'excitation des branches.

Par exemple, le moyen élastique s'étend entre les deux branches. De même, une tige de la base peut s'étendre entre les deux moyens de mobilité respectivement des deux branches.

Selon un autre aspect, ladite au moins une branche peut présenter au moins un organe de butée configuré pour limiter un battement d'une branche selon un sens par interférence de forme avec la base.

Selon un autre aspect, ladite au moins une branche s'étendant d'un pied relié à la base par un moyen de mobilité vers une extrémité libre, le pied comporte au moins un des organes de butées suivants :
- un organe de butée transversal saillant du pied en s'étendant parallèlement à une direction transversale, un espace longitudinal séparant l'organe de butée transversal de la base dans au moins la position de repos ou la position activée,
- un organe de butée longitudinal saillant du pied en s'étendant perpendiculairement à la direction transversale, un espace transversal séparant l'organe de butée longitudinal de la base dans au moins la position de repos ou la position activée.

La direction transversale peut être parallèle à une tangente à un cercle dans lequel le dispositif haptique est inscrit.

Selon un autre aspect, le moyen d'excitation peut comporter une bobine électrique.

Le moyen d'excitation peut exciter chaque branche par une voie électromagnétique. Chaque branche voire la base peuvent être réalisées à partir d'un matériau magnétique, tel qu'un matériau métallique.

La bobine électrique polarise de manière globale un circuit magnétique comprenant chaque branche du dispositif haptique vibreur pour tendre à refermer un entrefer. Un tel entrefer peut séparer le cas échéant deux branches l'une de l'autre ou encore une branche et la base.

Afin d'optimiser le comportement du circuit magnétique, notamment au droit de la bobine électrique, la bobine électrique peut tendre à fermer simultanément un entrefer principal séparant deux extrémités libres de deux branches, et des entrefers secondaires ménagés chacun entre une branche et la base au voisinage du moyen de mobilité de la branche.

Eventuellement, l'actionnement peut également être réalisé au moyen d'un circuit magnétique localisé au voisinage de la bobine électrique, en refermant seulement les entrefers secondaires.

Le cas échéant, la bobine électrique peut être agencée autour d'une tige de la base.

Le moyen d'excitation peut comporter un barreau piézoélectrique relié à au moins une branche.

Le moyen d'excitation peut déplacer chaque branche au moyen d'un élément piézoélectrique disposé entre deux branches ou entre une branche et la base par exemple.

Le barreau piézoélectrique travaille en mode « piston » en étant alimenté électriquement pour par exemple se détendre. Ainsi, le barreau piézoélectrique est précontraint en compression par le moyen élastique en l'absence de courant électrique et s'étend en comprimant le moyen élastique en étant alimenté électriquement.

Le barreau piézoélectrique peut être décalé radialement par rapport à chaque axe de rotation des moyens de mobilité pour maximiser le bras de levier séparant le barreau piézoélectrique de chaque branche.

Le barreau piézoélectrique peut être alimenté par un courant électrique à basse tension. Dès lors, le barreau piézoélectrique peut être de type céramiques PZT multicouches, par exemple.

L'invention concerne aussi un ensemble de pilotage comprenant un manche de pilotage et un dispositif haptique du type décrit précédemment. Le dispositif haptique est fixé à un tronçon du manche de pilotage, chaque branche s'étendant circonférentiellement autour du tronçon.

La base peut être immobile par rapport à ce tronçon en position de montage.

L'invention concerne aussi un aéronef muni d'un tel ensemble de pilotage.

L'invention et ses avantages apparaîtront avec plus de détails dans le cadre de la description qui suit avec des exemples donnés à titre illustratif en référence aux figures annexées qui représentent :
- la figure 1, une vue montrant un ensemble de pilotage d'un aéronef selon l'invention comprenant un manche de pilotage et un dispositif haptique,
- la figure 2, un vue schématique explicitant un moyen de fixation d'un dispositif haptique à un manche de pilotage,
- la figure 3, un dispositif haptique à deux branches muni d'un moyen d'excitation comprenant une bobine électrique,
- la figure 4, un dispositif haptique à deux branches muni d'un moyen d'excitation comprenant un barreau piézoélectrique,
- la figure 5, un dispositif haptique à une branche muni d'un moyen d'excitation comprenant une bobine électrique, et
- la figure 6, un dispositif haptique à une branche muni d'un moyen d'excitation comprenant un barreau piézoélectrique.

Les éléments présents dans plusieurs figures distinctes sont affectés d'une seule et même référence.

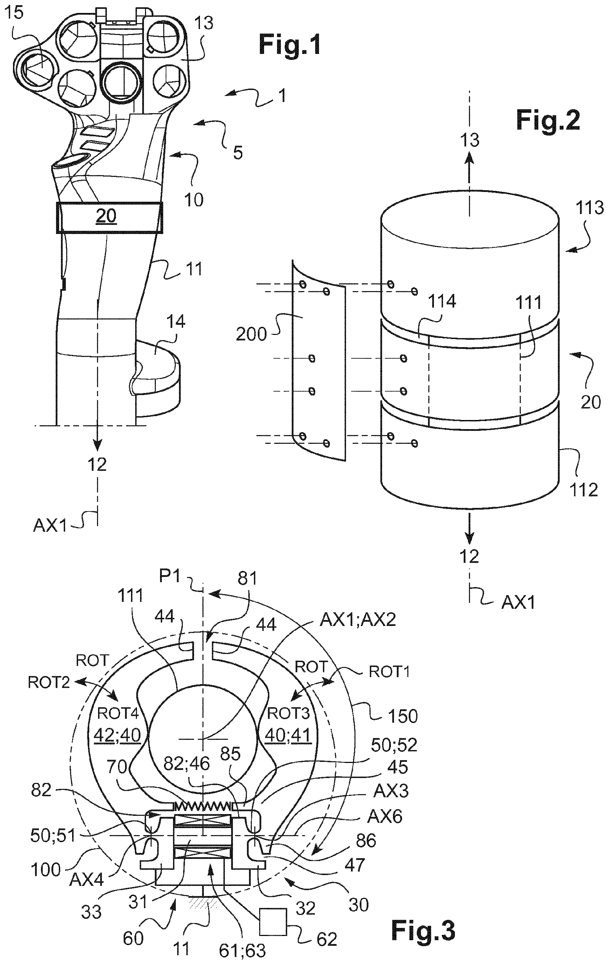

La figure 1 présente un ensemble de pilotage 5, et par exemple un ensemble de pilotage agencé sur un aéronef 1.

Cet ensemble de pilotage 5 est muni d'un manche de pilotage 10 et d'un dispositif haptique 20.

Le manche de pilotage 10 s'étend en élévation le long d'un axe dénommé « axe d'extension médian AX1 ». Ce manche de pilotage 10 comporte une portion centrale s'étendant en élévation entre une articulation 12 et une portion extrémale 13 portant divers moyens de commande 15 manoeuvrables par un pilote. Ces moyens de commande 15 sont reliés à des fils serpentant à l'intérieur du tronçon 11.

En outre, la portion centrale peut comprendre un épaulement 14 sur lequel un pilote peut reposer un flanc de la paume d'une de ses mains, classiquement le flanc de la paume situé dans le prolongement de son petit doigt. Le pilote peut alors manoeuvrer les moyens de commande 15 avec son pouce voire son index par exemple.

Le dispositif haptique 20 est alors fixé à un tronçon 11 du manche de pilotage.

Par exemple, le tronçon 11 représente la portion centrale. Le dispositif haptique entoure alors au moins partiellement la portion centrale.

En référence à la figure 2, le tronçon 11 du manche de pilotage équipé du dispositif haptique peut comprendre une première section 112 et une deuxième section 113 séparées par une section intermédiaire 111. La section intermédiaire 111 peut posséder des dimensions inférieures aux dimensions de la première section 112 et de la deuxième section 113 pour ménager une gorge annulaire 114. Pour illustrer cet aspect, les sections peuvent prendre la forme d'un cylindre à base circulaire centré sur l'axe d'extension médian Ax1, la section intermédiaire 111 présentant un diamètre inférieur aux diamètres de la première section 112 et de la deuxième section 113.

Dès lors, le dispositif haptique 20 peut être logé dans la gorge annulaire 114 en entourant la section intermédiaire 111 du tronçon. Une plaque 200 peut par exemple fixer le dispositif haptique 20 à la première section 112 et/ou à la deuxième section 113. Des capots peuvent recouvrir le dispositif haptique à des fins esthétiques.

Indépendamment de cet aspect, les figures 3 à 6 illustrent un dispositif haptique 20 selon diverses réalisations de l'invention.

En référence à la figure 3 et quelle que soit la réalisation, le dispositif haptique 20 comporte une base 30 portant un ensemble massique vibrant.

Cet ensemble massique est pourvu d'au moins une branche 40.

Chaque branche 40 s'étend circonférentiellement dans un plan orthogonal à un axe central AX2 en couvrant un arc de cercle 150. Cet arc de cercle 150 est supérieur ou égal à au moins 45 degrés.

En position de montage, l'axe central AX2 est superposé à l'axe d'extension médian AX1. Dès lors, chaque branche s'étend autour du tronçon 11 du manche de pilotage équipé du dispositif haptique. Par exemple, chaque branche 40 s'étend dans une gorge du tronçon autour d'une section intermédiaire 111 du tronçon.

En particulier, chaque branche 40 s'étend circonférentiellement d'un pied 45 vers une extrémité libre 44. Le pied 45 est alors articulé à la base par un moyen de mobilité 50.

Le moyen de mobilité 50 d'une branche 40 octroie à cette branche 40, par rapport à la base 30, un degré de liberté en rotation ROT autour d'un axe de rotation AX3, AX4. Cet axe de rotation est décalé par rapport à l'axe central AX2, voire par rapport à un plan de symétrie P1 du dispositif haptique. En outre, cet axe de rotation est situé en dehors du tronçon 11 du manche de pilotage entouré par la branche correspondante.

Par exemple, le moyen de mobilité 50 peut comporter un pivot 51 ou une lame flexible 52. Ces deux types de moyen de mobilité sont illustrés sur la figure 3.

En outre, le dispositif haptique 20 possède un organe d'excitation 60 pour déplacer chaque branche 40 d'une position de repos vers une position activée représentée sur la figure 3.

L'expression « position au repos » désigne la position atteinte par la branche en l'absence d'effort exercé par l'organe d'excitation 60.

A l'inverse, l'expression « position activée » désigne la position atteinte par la branche en présence d'un effort exercé par l'organe d'excitation 60.

Cet organe d'excitation 60 comprend un moyen d'excitation 61 électrique générant un effort apte à entraîner la rotation d'une branche autour de l'axe de rotation correspondant. Ce moyen d'excitation 61 peut par exemple comprendre une bobine magnétique 63 visible sur le figure 3 ou un barreau piézoélectrique illustré par la suite.

De plus, l'organe d'excitation peut comprendre une unité de traitement 62 générant un ordre d'excitation transmis au moyen d'excitation pour requérir le déplacement de chaque branche. L'unité de traitement peut comprendre par exemple un processeur, un circuit intégré, un système programmable, un circuit logique, ces exemples ne limitant pas la portée donnée à l'expression « unité de traitement ». Cette unité de traitement peut comporter divers capteurs pour déterminer si un ordre de déplacement doit être transmis au moyen d'excitation.

Par exemple, un système avionique de l'aéronef ordonne à l'unité de traitement d'alimenter électriquement le moyen d'excitation à une fréquence prédéterminée.

En outre, le dispositif haptique comprend un moyen élastique de rappel 70 relié à chaque branche pour ramener une branche de sa position activée à sa position de repos.

Le moyen élastique de rappel peut comprendre au moins un ressort ou un organe élastique.

Par exemple, le moyen élastique de rappel 70 et le moyen de mobilité 50 forment un même organe. En effet ; une lame élastique reliant le pied d'une branche à la base peut faire office de moyen élastique de rappel et de moyen de mobilité.

Selon un autre aspect, chaque branche peut être munie d'au moins un organe de butée 85, 86. Un tel organe de butée 85, 86 est configuré pour limiter un battement de la branche selon un sens par interférence de forme avec la base 30 pour soit éviter de détériorer le manche de pilotage soit éviter l'arrachement de la branche.

Ainsi, une branche peut comprendre un organe de butée transversal 85. Cet organe de butée transversal 85 saille du pied 45 de la branche en s'étendant parallèlement à une direction transversale AX6. Cette direction transversale est par exemple parallèle à une tangente d'un cercle 100 dans lequel est inscrit le dispositif haptique, et représente éventuellement un axe transversal AX6 d'extension de la base 30. Un espace longitudinal 46 sépare l'organe de butée transversal 85 de la base 30, dans au moins la position de repos ou la position activée, selon une direction orthogonale à la direction transversale.

De manière alternative ou complémentaire, une branche peut comprendre un organe de butée longitudinal 86. Cet organe de butée longitudinal 86 saille du pied 45 de la branche en s'étendant perpendiculairement à la direction transversale AX6. Un espace transversal 47 sépare alors l'organe de butée longitudinal 86 de la base 30, dans au moins la position de repos ou la position activée, selon une direction parallèle à la direction transversale.

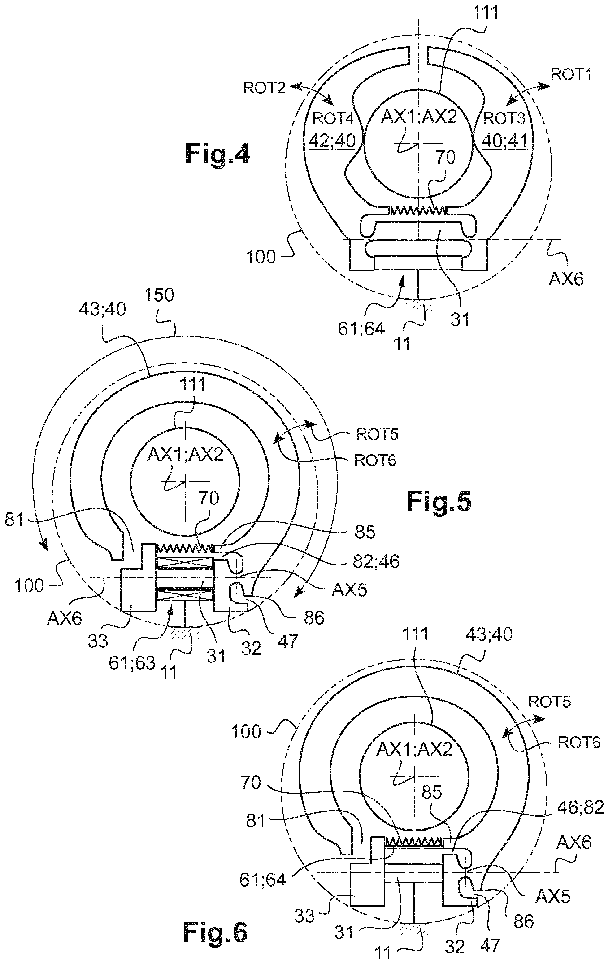

Dès lors, les figures 3 et 4 illustrent un ensemble massique comprenant deux branches 41, 42, les figures 5 et 6 illustrant un ensemble massique ayant une unique branche 43.

Selon un premier mode de réalisation et en référence à la figure 3, l'ensemble massique comporte donc une première branche 41 mobile en rotation autour d'un premier axe de rotation AX3 d'un premier moyen de mobilité. De plus, l'ensemble massique comporte une deuxième branche 42 mobile en rotation autour d'un deuxième axe de rotation AX4 d'un deuxième moyen de mobilité. Un entrefer supérieur 81 sépare transversalement la première extrémité libre de la première branche et la deuxième extrémité libre de la deuxième branche.

Dans la position activée, la première branche 41 et la deuxième branche 42 peuvent être en contact avec le tronçon du manche de pilotage entouré par le dispositif haptique. Ainsi, chaque branche peut par exemple comporter une excroissance en appui sur une surface extérieure de ce tronçon dans cette position au repos.

Dans la position au repos et/ ou activée, la première branche 41 et la deuxième branche 42 peuvent être situées symétriquement de part et d'autre d'un plan en élévation de symétrie P1. Le premier axe de rotation AX3 et le deuxième axe de rotation AX4 sont symétriquement disposés de part et d'autre de ce plan en élévation de symétrie P1.

En outre, le moyen élastique de rappel 70 peut s'étendre de la première branche 41 à la deuxième branche 42. Par exemple, le moyen élastique de rappel 70 est d'une part fixé à l'organe de butée transversal 85 de la première branche et, d'autre part, à l'organe de butée transversal 85 de la deuxième branche.

De manière alternative, chaque branche peut être reliée à la base 30 par son propre moyen élastique de rappel.

Selon une première variante du premier mode de réalisation illustré sur la figure 3, cette base peut comprendre une tige 31 solidaire de deux platines 32, 33. La tige 31 s'étend selon un axe transversal d'extension AX6 transversalement d'une platine 32 à l'autre platine 33. La première branche 41 est alors articulée à une première platine, la deuxième branche 42 étant articulée à la deuxième platine.

Au moins une platine voire la tige sont alors éventuellement fixées au tronçon 11 par un moyen de fixation usuel, tel qu'un moyen de vissage par exemple.

En outre, le moyen d'excitation comporte une bobine électrique 63 agencée autour de la tige 32.

Dès lors et lorsque la bobine électrique 63 n'est pas alimentée électriquement, le moyen de rappel élastique 70 tend à écarter la première branche 41 et la deuxième branche 42 l'une de l'autre en leur faisant effectuer des rotations opposées ROT1, ROT2 autour de leurs axes de rotation AX3, AX4 respectifs.

Par contre, lorsque la bobine électrique 63 est alimentée électriquement, cette bobine tend à refermer l'entrefer supérieur 81, voire des entrefers inférieurs 82 représentés par chaque espace longitudinal 46. La première branche 41 et la deuxième branche 42 tendent à se rapprocher l'une de l'autre en effectuant des rotations opposées ROT3, ROT4 autour de leurs axes de rotation AX3, AX4 respectifs. La première branche 41 et la deuxième branche 42 entrent alors en contact contre le manche de pilotage.

Selon la deuxième variante du premier mode de réalisation illustrée sur la figure 4, la base peut comprendre une tige 31 solidaire du moyen de mobilité articulé à la première branche 41 et du moyen de mobilité articulé à la deuxième branche 42.

Par ailleurs, le moyen d'excitation comporte un barreau piézoélectrique 64 s'étendant entre une excroissance de la première branche 41 et une excroissance de la deuxième branche 42.

La tige et/ou une zone immobile du barreau piézoélectrique 64 peuvent être fixées au tronçon 11 du manche de pilotage.

Dès lors et lorsque le barreau piézoélectrique 64 n'est pas alimenté électriquement, le moyen de rappel élastique 70 tend à rapprocher la première branche 41 et la deuxième branche 42 l'une de l'autre en leur faisant effectuer des rotations opposées ROT3, ROT4 autour de leurs axes de rotation AX3, AX4 respectifs. La première branche 41 et la deuxième branche 42 entrent alors en contact contre le manche de pilotage. En outre, le barreau piézoélectrique 64 est précontraint en compression.

Par contre, lorsque le barreau piézoélectrique 64 est alimenté électriquement, le barreau piézoélectrique 64 se détend. Le barreau piézoélectrique 64 tend à écarter la première branche 41 et la deuxième branche 42 l'une de l'autre en effectuant des rotations opposées ROT1, ROT2 autour de leurs axes de rotation AX3, AX4 respectifs.

Les coups portés par la première branche 41 et la deuxième branche 42 à une certaine fréquence entraînent la vibration du tronçon 11 du manche de pilotage.

Selon un deuxième mode de réalisation et en référence à la figure 5, l'ensemble massique comporte donc une seule branche 43 mobile en rotation autour d'un seul axe de rotation AX5 d'un seul moyen de mobilité. Un entrefer supérieur 81 sépare l'extrémité libre de la seule branche 43 et la base.

Dès lors, l'arc de cercle 150 décrit par la seule branche 43 est supérieur ou égal à au moins 270 degrés

Dans la position activée et dans la position de repos, la seule branche 43 peut ne jamais être en contact avec le tronçon du manche de pilotage entouré par le dispositif haptique.

Par ailleurs, la base 30 peut comprendre une tige 31 solidaire de deux platines 32, 33. La tige 31 s'étend selon un axe d'extension AX6 transversalement d'une platine 32 à l'autre platine 33. La seule branche 43 est alors articulée à une première platine.

Au moins une platine voire la tige sont alors éventuellement fixées au tronçon par un moyen de fixation usuel, tel qu'un moyen de vissage par exemple.

En outre, le moyen élastique de rappel 70 peut s'étendre de la seule branche 43 à la base. Par exemple, le moyen élastique de rappel 70 est d'une part fixé à l'organe de butée transversal 85 de la seule branche 43 et, d'autre part, à la platine 33 qui n'est pas solidaire du moyen de mobilité.

Selon la première variante du deuxième mode de réalisation illustré sur la figure 5, le moyen d'excitation comporte une bobine électrique 63 agencée autour de la tige 32.

Dès lors et lorsque la bobine électrique 63 n'est pas alimentée électriquement, le moyen de rappel élastique 70 tend à écarter l'extrémité libre de la seule branche 43 de la base 30 en lui faisant effectuer une rotation ROT5 autour de son axe de rotation AX5.

Par contre, lorsque la bobine électrique 63 est alimentée électriquement, cette bobine électrique 63 tend à refermer l'entrefer supérieur 81, voire un entrefer inférieur 82 représenté par chaque espace longitudinal 46. L'extrémité libre de la seule branche 43 tend à se rapprocher de la base 30 en effectuant une rotation ROT6.

Selon la deuxième variante du deuxième mode de réalisation illustrée sur la figure 6, le moyen d'excitation comporte un barreau piézoélectrique 64. Le barreau piézoélectrique 64 s'étend entre une excroissance de la seule branche 43 et la base 30.

Dès lors et lorsque le barreau piézoélectrique 64 n'est pas alimenté électriquement, le moyen de rappel élastique 70 tend à rapprocher l'extrémité libre de la seule branche 43 de la base 30 en lui faisant effectuer une rotation ROT6 autour de son axe de rotation. En outre, le barreau piézoélectrique 64 est précontraint en compression.

Par contre, lorsque le barreau piézoélectrique 64 est alimenté électriquement, le barreau piézoélectrique 64 se détend. Le barreau piézoélectrique 64 tend à écarter l'extrémité libre de la seule branche 43 de la base 30 en lui faisant effectuer une rotation ROT5 autour de son axe de rotation.

Quel que soit le mode de réalisation et à titre illustratif, le dispositif haptique peut être inscrit dans un cercle 100 présentant un diamètre de l'ordre de 25 millimètres. Le dispositif haptique peut en outre s'étendre en élévation sur une hauteur de l'ordre de 20 millimètres par exemple. L'ensemble massique peut par exemple posséder une masse de 15 grammes.

L'entrefer supérieur séparant deux branches l'une de l'autre ou une seule branche d'une base peut être de l'ordre du millimètre.

Chaque branche peut avoir une amplitude vibratoire de l'ordre 0.2 millimètre en étant sollicitée à une fréquence de l'ordre de 50 à 100 Hz (hertz).

Dans le cas d'une utilisation d'une bobine électrique, la bobine peut présenter une résistance de l'ordre de 25 Ohms, et une inductance propre moyenne de 100 mH (milliHenry). Le courant électrique traversant la bobine électrique peut présenter une intensité de l'ordre de 0.18 ampère et une amplitude de tension électrique à 100 Hz de 12 Volts.

Dans le cas d'une utilisation d'un barreau piézoélectrique, ce barreau piézoélectrique peut avoir une longueur de l'ordre de 20 millimètres et une section de l'ordre de 9 millimètres par exemple.

Le barreau piézoélectrique peut présenter une capacitance de 4.5 µF. Le courant électrique traversant le barreau piézoélectrique peut présenter une intensité de l'ordre de 60 ampères et une amplitude de tension électrique à 100 Hz de 20 Volts.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif haptique (20) pour faire vibrer un tronçon (11) d'un manche de pilotage (10) sur commande,
le dispositif haptique (20) comprenant :
- une base (30),
- un ensemble massique comprenant au moins une branche (41, 42, 43) battante, ladite au moins une branche (41, 42, 43) s'étendant circonférentiellement sur au moins 45 degrés autour d'un axe central (AX2), ledit axe central (AX2) étant configuré pour être en position de montage confondu avec un axe d'extension médian (AX1) dudit tronçon (11), chaque branche (41, 42, 43) étant reliée à la base (30) par un moyen de mobilité (50) conférant un degré de liberté en rotation (ROT) à cette branche (41, 42, 43) autour d'un axe de rotation (AX3, AX4, AX5) par rapport à la base (30), ledit axe de rotation (AX3, AX4, AX5) étant distinct dudit axe central (AX2),
- un organe d'excitation (60) comprenant un moyen d'excitation (61) électrique configuré pour faire battre en rotation autour de l'axe de rotation (AX3, AX4, AX5) ladite au moins une branche (41, 42, 43) d'une position de repos vers une position activée,
- un moyen élastique de rappel (70) tendant à maintenir chaque branche (41, 42, 43) dans la position de repos correspondante.

2. Dispositif haptique selon la revendication 1,
**caractérisé en ce que** ledit moyen de mobilité (50) comporte un pivot (51).

3. Dispositif haptique selon l'une quelconque des revendications 1 à 2,
**caractérisé en ce que** ledit moyen de mobilité (50) comporte une lame élastique (52).

4. Dispositif haptique selon l'une quelconque des revendications 1 à 3,
**caractérisé en ce que** ladite base (30) comporte une tige (31) et deux platines (32, 33), ladite tige (31) s'étendant selon un axe transversal d'extension (AX6) transversalement d'une platine (32) à l'autre platine (33), chaque branche (41, 42, 43) étant reliée par un moyen de mobilité (50) à une platine (32, 33).

5. Dispositif haptique selon l'une quelconque des revendications 1 à 4,
**caractérisé en ce que** ledit moyen élastique de rappel (70) et ledit moyen de mobilité (50) d'une branche sont confondus.

6. Dispositif haptique selon l'une quelconque des revendications 1 à 5,
**caractérisé en ce que** ladite au moins une branche comporte une seule branche (43) s'étendant autour de l'axe central sur au moins 270 degrés.

7. Dispositif haptique selon la revendication 6,
**caractérisé en ce que** ledit moyen de rappel (70) s'étend entre ladite seule branche (43) et une platine (32, 33) de la base (30).

8. Dispositif haptique selon l'une quelconque des revendications 1 à 5,
**caractérisé en ce que** ledit ensemble massique comporte deux branches (41, 42), chaque branche (41, 42) s'étendant d'un pied (45) solidaire d'un moyen de mobilité (50) vers une extrémité libre (44), un entrefer (81) séparant transversalement les extrémités libres (44) des deux branches (41, 42), ledit moyen d'excitation (61) déplaçant les deux branches (41, 42) selon deux sens opposés (ROT1, ROT2).

9. Dispositif haptique selon la revendication 8,
**caractérisé en ce que** ledit moyen élastique de rappel (70) s'étend entre les deux branches (41, 42).

10. Dispositif haptique selon l'une quelconque des revendications 1 à 9,
**caractérisé en ce que** ladite au moins une branche (41, 42, 43) présente au moins un organe de butée (85, 86) configuré pour limiter un battement d'une branche (41, 42, 43) selon un sens par interférence de forme avec la base (30).

11. Dispositif haptique selon la revendication 10,
**caractérisé en ce que** ladite au moins une branche (41, 42, 43) s'étendant d'un pied (45) relié à la base (30) par un moyen de mobilité (50) vers une extrémité libre (44), ledit pied (45) comporte au moins un des organes de butées suivants :
- un organe de butée transversal (85) saillant du pied (45) en s'étendant parallèlement à une direction transversale (AX6), un espace longitudinal (46) séparant l'organe de butée transversal (85) de la base (30) dans au moins la position de repos ou la position activée,
- un organe de butée longitudinal (86) saillant du pied (45) en s'étendant perpendiculairement à la direction transversale (AX6), un espace transversal (47) séparant l'organe de butée longitudinal (86) de la base (30) dans au moins la position de repos ou la position activée.

12. Dispositif haptique selon l'une quelconque des revendications 1 à 11,
**caractérisé en ce que** ledit moyen d'excitation (61) comporte une bobine électrique (63).

13. Dispositif haptique selon la revendication 4 et la revendication 12,
**caractérisé en ce que** ladite bobine électrique (63) est agencée autour d'une tige (31) de la base (30).

14. Dispositif haptique selon l'une quelconque des revendications 1 à 11,
**caractérisé en ce que** ledit moyen d'excitation (61) comporte un barreau piézoélectrique (64) relié à au moins une branche (41, 42, 43).

15. Ensemble de pilotage (5) comprenant un manche de pilotage (10) et un dispositif haptique (20),
**caractérisé en ce que** ledit dispositif haptique (20) est selon l'une quelconque des revendications 1 à 14, ledit dispositif haptique (20) étant fixé à un tronçon (11) dudit manche de pilotage (10), chaque branche (41, 42, 43) s'étendant circonférentiellement autour du tronçon (11).

16. Aéronef (1),
**caractérisé en ce que** ledit aéronef (1) comporte un ensemble de pilotage (5) selon la revendication 15.

## Patentansprüche

1. Haptische Vorrichtung (20) zum In-Schwingung-Versetzen eines Abschnitts (11) eines Steuerknüppels (10) auf Befehl,
wobei die haptische Vorrichtung (20) aufweist:
- eine Basis (30),
- einen Masseverbund mit mindestens einem Schlagarm (41, 42, 43), wobei der mindestens eine Arm (41, 42, 43) sich in Umfangsrichtung über mindestens 45 Grad um eine zentrale Achse (AX2) erstreckt, wobei die zentrale Achse (AX2) ausgebildet ist, um in Montagestellung mit einer mittleren Erstreckungsachse (AX1) des Abschnitts (11) zu verschmelzen, wobei jeder Arm (41, 42, 43) mit der Basis (30) über ein Beweglichkeitsmittel (50) verbunden ist, das diesem Arm (41, 42, 43) einen Grad der Drehbeweglichkeit (ROT) um eine Drehachse (AX3, AX4, AX5) relativ zu der Basis (30) verleiht, wobei die Drehachse (AX3, AX4, AX5) von der zentralen Achse (AX2) verschieden ist,
- ein Erregungselement (60), das ein elektrisches Erregungsmittel (61) aufweist, das ausgebildet ist, um den mindestens einen Arm (41, 42, 43) in Drehrichtung um eine Rotationsachse (AX3, AX4, AX5) pulsieren zu lassen, aus einer Ruhestellung heraus in eine aktivierte Stellung,
- ein elastisches Rückstellelement (70), das darauf abzielt, jeden Arm (41, 42, 43) in der entsprechenden Ruhestellung zurückzuhalten.

2. Haptische Vorrichtung nach Anspruch 1,
**dadurch gekennzeichnet, dass** das Beweglichkeitsmittel (50) einen Drehpunkt (51) aufweist.

3. Haptische Vorrichtung nach einem der Ansprüche 1 bis 2,
**dadurch gekennzeichnet, dass** das Beweglichkeitsmittel (50) mindestens eine elastische Lamelle (52) aufweist.

4. Haptische Vorrichtung nach einem der Ansprüche 1 bis 3,
**dadurch gekennzeichnet, dass** die Basis (30) eine Stange (31) und zwei Platten (32, 33) aufweist, wobei die Stange (31) sich entlang einer Quererstreckungsachse (AX6) quer zu einer Platte (32) zur anderen Platte (33) erstreckt, wobei jeder Arm (41, 42, 43) über ein Beweglichkeitsmittel (50) mit einer Platte (32, 33) verbunden ist.

5. Haptische Vorrichtung nach einem der Ansprüche 1 bis 4,
**dadurch gekennzeichnet, dass** das elastische Rückstellmittel (70) und das Beweglichkeitsmittel (50) eines Arms vereinigt sind.

6. Haptische Vorrichtung nach einem der Ansprüche 1 bis 5,
**dadurch gekennzeichnet, dass** der mindestens eine Arm einen einzigen Arm (43) aufweist, der sich um die zentrale Achse über mindestens 270° erstreckt.

7. Haptische Vorrichtung nach Anspruch 6,
**dadurch gekennzeichnet, dass** das Rückstellmittel (70) sich zwischen dem einzigen Arm (43) und einer Platte (32, 33) der Basis (30) erstreckt.

8. Haptische Vorrichtung nach einem der Ansprüche 1 bis 5,
**dadurch gekennzeichnet, dass** der Masseverbund zwei Arme (41, 42) aufweist, wobei jeder Arm (41, 42) sich von einem Fuß (45), der mit einem Beweglichkeitsmittel (50) fest verbunden ist, zu einem freien Ende (44) erstreckt, wobei ein Luftspalt (81) in Querrichtung die freien Enden (44) der beiden Arme (41, 42) trennt, wobei das Erregungsmittel (61) die beiden Arme (41, 42) in zwei entgegengesetzte Richtungen (ROT1, ROT2) bewegt.

9. Haptische Vorrichtung nach Anspruch 8,
**dadurch gekennzeichnet, dass** das elastische Rückstellmittel (70) sich zwischen den zwei Armen (41, 42) erstreckt.

10. Haptische Vorrichtung nach einem der Ansprüche 1 bis 9,
**dadurch gekennzeichnet, dass** der mindestens eine Arm (41, 42, 43) mindestens ein Anschlagselement (85, 86) aufweist, das ausgebildet ist, um ein Pulsieren eines Arms (41, 42, 43) in eine Richtung durch Formschluss mit der Basis (30) zu begrenzen.

11. Haptische Vorrichtung nach Anspruch 10,
**dadurch gekennzeichnet, dass** der mindestens eine Arm (41, 42, 43) sich von einem Fuß (45), der mit der Basis (30) über ein Beweglichkeitsmittel (50) fest verbunden ist, bis zu einem freien Ende (44) erstreckt, wobei der Fuß (45) mindestens eines der folgenden Anschlagselemente aufweist:
- ein transversales Anschlagselement (85), das gegenüber dem Fuß (45) vorsteht, indem es sich parallel zu einer Querrichtung (AX6) erstreckt, wobei ein länglicher Raum (46) das transversale Anschlagselement (85) von der Basis (30) in der Ruhestellung und/oder der aktivierten Stellung trennt,
- ein longitudinales Anschlagselement (86), das gegenüber dem Fuß (45) vorsteht, indem es sich senkrecht zu der Querrichtung (AX6) erstreckt, wobei ein transversaler Raum (47) das longitudinale Anschlagselement (46) von der Basis (30) in mindestens der Ruhestellung oder der aktivierten Stellung trennt.

12. Haptische Vorrichtung nach einem der Ansprüche 1 bis 11,
**dadurch gekennzeichnet, dass** das Erregungsmittel (61) eine elektrische Spule (63) aufweist.

13. Haptische Vorrichtung nach den Ansprüchen 4 und 12,
**dadurch gekennzeichnet, dass** die elektrische Spule (63) um eine Stange (31) der Basis (30) herum angeordnet ist.

14. Haptische Vorrichtung nach einem der Ansprüche 1 bis 11,
**dadurch gekennzeichnet, dass** das Erregungsmittel (61) einen piezoelektrischen Stab (64) aufweist, der mit mindestens einem Arm (41, 42, 43) verbunden ist.

15. Steuerungsanordnung (5) mit einem Steuerknüppel (10) und einer haptischen Vorrichtung (20),
**dadurch gekennzeichnet, dass** die haptische Vorrichtung (20) eine Vorrichtung gemäß einem der Ansprüche 1 bis 14 ist, wobei die haptische Vorrichtung (20) an einem Abschnitt (11) des Steuerknüppels (10) befestigt ist, wobei jeder Arm (41, 42, 43) sich in Umfangsrichtung um den Abschnitt (11) erstreckt.

16. Luftfahrzeug (1),
**dadurch gekennzeichnet, dass** das Luftfahrzeug (1) eine Steueranordnung (5) nach Anspruch 15 aufweist.

## Claims

1. Haptic device (20) for vibrating a segment (11) of a control stick (10) on command,
the haptic device (20) comprising:
- a base (30),
- a mass assembly comprising at least one swinging branch (41, 42, 43), said at least one branch (41, 42, 43) extending circumferentially over at least 45 degrees around a central axis (AX2), said central axis (AX2) being configured to be in a mounting position coinciding with a median extension axis (AX1) of said segment (11), each branch (41, 42, 43) being connected to the base (30) by a mobility means (50) conferring a degree of freedom in rotation (ROT) on said branch (41, 42, 43) about an axis of rotation (AX3, AX4, AX5) relative to the base (30), said axis of rotation (AX3, AX4, AX5) being distinct from said central axis (AX2),
- an excitation member (60) comprising an electrical excitation means (61) configured to cause said at least one branch (41, 42, 43) to swing in rotation about the axis of rotation (AX3, AX4, AX5) from a rest position to an activated position,
- an elastic return means (70) tending to maintain each branch (41, 42, 43) in the corresponding rest position.

2. Haptic device according to claim 1,
**characterised in that** said mobility means (50) comprises a pivot (51).

3. Haptic device according to any one of claims 1 to 2,
**characterised in that** said mobility means (50) comprises an elastic blade (52).

4. Haptic device according to any one of claims 1 to 3,
**characterised in that** said base (30) comprises a rod (31) and two plates (32, 33), said rod (31) extending along a transverse extension axis (AX6) transversely from one plate (32) to the other plate (33), each branch (41, 42, 43) being connected by a mobility means (50) to a plate (32, 33).

5. Haptic device according to any one claims 1 to 4,
**characterised in that** said elastic return means (70) and said mobility means (50) of a branch coincide.

6. Haptic device according to any one claims 1 to 5,
**characterised in that** said at least one branch comprises a single branch (43) extending around the central axis over at least 270 degrees.

7. Haptic device according to claim 6,
**characterised in that** said return means (70) extends between said single branch (43) and a plate (32, 33) of the base (30).

8. Haptic device according to any one claims 1 to 5,
**characterised in that** said mass assembly comprises two branches (41, 42), each branch (41, 42) extending from a root (45) secured to a mobility means (50) towards a free end (44), an air gap (81) separating transversely the free ends (44) of the two branches (41, 42), said excitation means (61) moving the two branches (41, 42) in two opposite directions (ROT1, ROT2) .

9. Haptic device according to claim 8,
**characterised in that** said elastic return means (70) extends between the two branches (41, 42).

10. Haptic device according to any one of claims 1 to 9,
**characterised in that** said at least one branch (41, 42, 43) has at least one abutment member (85, 86) configured to limit a swing of a branch (41, 42, 43) in one direction by shape interference with the base (30).

11. Haptic device according to claim 10,
**characterised in that** said at least one branch (41, 42, 43) extending from a root (45) connected to the base (30) by a mobility means (50) towards a free end (44), said root (45) comprises at least one of the following abutment members:
- a transverse abutment member (85) projecting from the root (45) and extending parallel to a transverse direction (AX6), a longitudinal space (46) separating the transverse abutment member (85) from the base (30) in at least the rest position or the activated position,
- a longitudinal abutment member (86) projecting from the root (45) and extending perpendicularly to the transverse direction (AX6), a transverse space (47) separating the longitudinal abutment member (86) from the base (30) in at least the rest position or the activated position.

12. Haptic device according to any one of claims 1 to 11,
**characterised in that** said excitation means (61) comprises an electric coil (63).

13. Haptic device according to claim 4 and claim 12,
**characterised in that** said electric coil (63) is arranged around a rod (31) of the base (30).

14. Haptic device according to any one of claims 1 to 11,
**characterised in that** said excitation means (61) comprises a piezoelectric bar (64) connected to at least one branch (41, 42, 43) .

15. Control assembly (5) comprising a control stick (10) and a haptic device (20),
**characterised in** said haptic device (20) is according to any one of claims 1 to 14, said haptic device (20) being fastened to a segment (11) of said control stick (10), each branch (41, 42, 43) extending circumferentially around the segment (11).

16. Aircraft (1),
**characterised in that** said aircraft (1) comprises a control assembly (5) according to claim 15.
